# EUROPÄISCHE PATENTSCHRIFT

(11) **EP 1 470 073 B1**
(45) Veröffentlichungstag und Bekanntmachung des Hinweises auf die Patenterteilung: **21.11.2007**
(21) Anmeldenummer: 03734642.6
(22) Anmeldetag: 23.01.2003
(51) Int. Cl.: B66B 11/04, B60L 13/10

(54) **AUFZUG, INSBESONDERE ZUM TRANSPORTIEREN VON PERSONEN**
ELEVATOR, PARTICULARLY FOR TRANSPORTING PASSENGERS
ASCENSEUR CON U EN PARTICULIER POUR TRANSPORTER DES PERSONNES

(30) Priorität: 31.01.2002 EP 02405056; 31.01.2002 EP 02405057; 31.01.2002 EP 02405058
(43) Veröffentlichungstag der Anmeldung: 27.10.2004
(73) Patentinhaber: INVENTIO AG, 6052 Hergiswil (CH)
(72) Erfinder: DEPLAZES, Romeo, CH-5647 Oberrrüti (CH); EVERTZ, Jörg, CH-8006 Zürich (CH); EILINGER, Thomas, CH-6403 Küssnacht a/Rigi (CH)
(86) Internationale Anmeldenummer: PCT/CH2003/000054
(87) Internationale Veröffentlichungsnummer: WO 2003/064310

(56) Entgegenhaltungen:
- EP-A- 0 877 466
- WO-A-02/02451
- DE-A- 19 634 629
- DE-U- 20 005 723
- US-A- 5 854 521

## Beschreibung

Die Erfindung betrifft einen Aufzug, insbesondere zum Transportieren von Personen, der einen Aufzugsschacht, eine in dem Aufzugsschacht geführte Aufzugskabine und einen die Aufzugskabine direkt antreibenden Antriebsmotor aufweist. Der Antriebsmotor ist mit einem an der Aufzugskabine angeordneten aktiven Primärteil und einem stationär im Aufzugsschacht angeordneten und durch einen Luftspalt zu dem Primärteil beabstandeten passiven Sekundärteil versehen.

Die Aufzugskabine herkömmlicher Aufzüge wird meist mittels Drahtseilen, die über eine von einem Elektromotor angetriebene Antriebsscheibe laufen, in dem Aufzugsschacht hinauf und hinab verfahren. Dieser indirekte Antrieb der Aufzugskabine ist mit dem Nachteil eines zusätzlichen Platzbedarfs für die Antriebsscheibe und den Elektromotor verbunden.

Im Stand der Technik sind ferner Aufzüge bekannt, die mit einem direkten Antrieb der Aufzugskabine versehen sind. So beschreibt die EP 0 785 162 A1 einen Aufzug, bei dem die Aufzugskabine direkt von einem Linearmotor angetrieben wird. Der Linearmotor weist einen an der Aufzugskabine angeordneten Primärteil und einen an einer Wandung des Aufzugsschachts befestigten und mit Permanentmagneten versehenen Sekundärteil auf. Der Primärteil ist mit Wicklungen versehen, in die ein Drehstrom eingespeist wird. Auf diese Weise entsteht ein magnetisches Wanderfeld, das elektromagnetische Kräfte ausbildet, die den Primärteil und damit die Aufzugskabine linear gegenüber dem Sekundärteil bewegen.

Ein eine Aufzugskabine direkt antreibender Linearmotor ist zudem aus der EP 0 858 965 A1 bekannt. In Hinsicht auf geringe Querkräfte weist dieser Linearmotor einen an der Aufzugskabine angeordneten Sekundärteil auf, der aus zwei Reihen einander gegenüberliegender Permanentmagnete gebildet ist. Der Primärteil dagegen besteht aus Wicklungen, die zwischen den Permanentmagneten des Sekundärteils angeordnet sind.

Das Vorsehen eines Linearmotors zum direkten Antreiben der Aufzugskabine hat im Unterschied zu Aufzügen mit einem indirekten Antrieb mittels Drahtseilen zwar den Vorteil, daß kein zusätzlicher Platzbedarf für einen Elektromotor und eine Antriebsscheibe erforderlich ist. Zudem macht das Vorsehen eines Linearmotors ein mit der Aufzugskabine verbundenes Gegengewicht entbehrlich. Als Nachteil der bekannten Linearmotoren hat sich vor allem bei vergleichsweise hohen Aufzugsschächten ein unzureichendes Leistungsvermögen und ein in wirtschaftlicher Hinsicht verhältnismäßig hoher Herstellungsaufwand herausgestellt. Hinsichtlich letzeres ist es etwa erforderlich, die gesamte Wandung des Aufzugsschachts entweder mit dem Sekundärteil oder mit dem Primärteil zu versehen. Da der Primärteil zumindest Wicklungen aufweist und der Sekundärteil mit Permanentmagneten bestückt ist, ergeben sich somit verhältnismäßig hohe Kosten.

Der Erfindung liegt die **Aufgabe** zugrunde, einen Aufzug der eingangs genannten Art dahingehend weiterzubilden, daß sich bei verhältnismäßig günstigen Herstellungskosten ein vergleichsweise hohes Leistungsvermögen des die Aufzugskabine direkt antreibenden Antriebsmotors erzielen läßt.

Zur Lösung dieser Aufgabe ist bei einem Aufzug mit den oben genannten Merkmalen in Übereinstimmung mit Anspruch 1 erfindungsgemäß vorgesehen, daß der Antriebsmotor als Transversalflußmaschine ausgestaltet ist, die den Primärteil unter dem Einfluß einer elektromagnetischen Vortriebskraft linear gegenüber dem Sekundärteil bewegt, wobei der Sekundärteil wenigstens eine aus einem weichmagnetischen Werkstoff gefertigte Schiene aufweist, die in eine Vielzahl von Segmente vorgegebener Länge unterteilt ist, und wobei die Segmente mittels Zwischenelementen an einer Wandung des Aufzugsschachts befestigt sind.

Ein derartiger Aufzug macht sich die Erkenntnis zu eigen, daß sich bei einer Transversalflußmaschine eine verhältnismäßig große Kraftdichte ergibt. Denn im Unterschied zu den nach dem Longitudinalflußprinzip arbeitenden Linearmotoren wird bei der Transversalflußmaschine der magnetische Fluß in Ebenen senkrecht zur Bewegungsrichtung geführt mit der Folge, daß sich relativ kleine Polteilungen, die zu einer großen Kraftdichte führen, realisieren lassen.

Die Ausbildung des Sekundärteils als eine aus einem weichmagnetischen Werkstoff gefertigte Schiene stellt eine vergleichsweise kostengünstige Fertigung sicher und ermöglicht eine einfache Montage in dem Aufzugsschacht. Da die zum Erzeugen des magnetischen Flusses erforderlichen Magnete und Wicklungen im bewegten Primärteil angeordnet sind, ist es ausreichend, den passiven Sekundärteil aus einem in wirtschaftlicher Hinsicht günstigeren weichmagnetischen Werkstoff zu fertigen. Unter einem weichmagnetischen Werkstoff im Sinne der vorliegenden Erfindung wird ein Werkstoff verstanden, der sich leicht magnetisieren und entmagnetisieren läßt, wie beispielsweise Eisen oder Ferrit. Die Schiene kann ferner aus einem Vollmaterial gefertigt oder mit dem weichmagnetischen Werkstoff laminiert sein.

Zum Erzeugen eines transversal zur Bewegungsrichtung der Aufzugskabine verlaufenden magnetischen Flusses weist der Primärteil zweckmäßigerweise wenigstens ein Erregermodul auf, das mit zumindest einem aus abwechselnd angeordneten Magneten und weichmagnetischen Zwischengliedern zusammengesetzten Sammler sowie mit zumindest einer in Bewegungsrichtung der Aufzugskabine verlaufenden Erregerwicklung versehen ist, wobei die Magnete zur Bildung einer vorgegebenen Polteilung mit alternierender Polarität in dem Sammler angeordnet sind.

Das Vorsehen des Erregermoduls ermöglicht einen modularen Aufbau des Primärteils. So können beispielsweise je nach gefordertem Leistungsvermögen mehrere Erregermodule nebeneinander und/oder hintereinander angeordnet werden. Der Abstand der Magnete in dem Sammler entspricht der Polteilung, wobei der von den Magneten erzeugte magnetische Fluß über die weichmagnetischen Zwischenglieder auf den Sekundärteil übertragen wird. Die Magnete sind sinnvollerweise als Permanentmagnete ausgebildet und bestehen zu diesem Zweck beispielsweise aus einem Seltenerdmetall, wie etwa Neodymium.

Um bei dem Vorhandensein von mehreren Erregermodulen zu verhindern, daß eine ungünstige magnetische Kopplung der durch die Erregermodule erzeugten Magnetfelder entsteht, ist die Schiene in eine Vielzahl von in Bewegungsrichtung der Aufzugskabine voneinander beabstandeten Segmente unterteilt. Wird als Abstand zwischen den Erregermodulen mindestens die Länge des längsten Segments gewählt, so ist ausgeschlossen, daß zwei hintereinander angeordnete Erregermodule mit ein und demselben Segment zusammenwirken. Denn der sich durch die beabstandete Anordnung der Segmente ergebende Luftspalt zwischen den einzelnen Segmenten stellt einen Widerstand für den magnetischen Fluß dar, der einer Streuung des magnetischen Flusses entgegenwirkt. Die erfindungsgemäße Segmentierung der Schiene trägt somit dazu bei, daß die magnetischen Feldlinien überwiegend in transversaler Richtung, das heißt senkrecht zur Bewegungsrichtung der Aufzugskabine, verlaufen. Durch die Anordnung der Segmente auf den Zwischenelementen wird zudem einer einfachen Montage und exakten Ausrichtung der Segmente Rechnung getragen.

Vorteilhafte Ausgestaltungen des erfindungsgemäßen Aufzugs stellen die Gegenstände der abhängigen Ansprüche dar.

So ist es in konstruktiver Hinsicht von Vorteil, die Zwischenelemente auf an der Wandung des Aufzugsschachts befestigten Trägerelementen anzuordnen. Von Vorteil ist ferner, die Zwischenelemente und die Trägerelemente aus einem nichtmagnetischen Werkstoff, vorzugsweise Aluminium, zu fertigen, um einen störenden Einfluß auf den magnetischen Fluß zu vermeiden. Bevorzugt sind die Zwischenelemente und die Trägerelemente aus dem gleichen Werkstoff gefertigt, so daß sie denselben thermischen Ausdehnungskoeffizienten aufweisen. Thermisch bedingte Spannungen zwischen den Zwischenelementen und den Trägerelementen lassen sich somit verhindern.

Die Segmente können zweckmäßigerweise miteinander verbunden und die Zwischenelemente in Bewegungsrichtung der Aufzugskabine voneinander beabstandet sein. Bei einer solchen Ausgestaltung verläuft der Kraftfluß überwiegend durch die Segmente. In einer besonders bevorzugten Ausgestaltung des erfindungsgemäßen Aufzugs sind die Segmente hingegen in Bewegungsrichtung der Aufzugskabine voneinander beabstandet und die Zwischenelemente miteinander verbunden, so daß der Kraftfluß hauptsächlich von den Zwischenelementen aufgenommen wird. Die in beiden Fällen nur noch Knickkräfte aufnehmenden Trägerelemente können in Bewegungsrichtung der Aufzugskabine voneinander beabstandet sein, um eine thermisch bedingte Längenausdehnung zu ermöglichen. Je nach Anwendungsfall ist es auch möglich, die Trägerelemente wegzulassen. Alternativ können die Segmente und die Zwischenelemente in Bewegungsrichtung der Aufzugskabine voneinander beabstandet und die Trägerelemente miteinander verbunden sein, so daß der Kraftfluß überwiegend durch die Trägerelemente geleitet wird.

Einer bevorzugten Weiterbildung des erfindungsgemäßen Aufzugs entsprechend sind die Zwischenelemente mit einer Führungsfläche für eine Führung des Primärteils in einer zu der Bewegungsrichtung senkrechten Querrichtung der Aufzugskabine versehen. Alternativ oder zusätzlich können die Zwischenelemente mit einer Führungsfläche für eine Führung des Primärteils in einer zu der Bewegungsrichtung und der Querrichtung senkrechten Normalrichtung der Aufzugskabine versehen sein.

Bevorzugt sind die Segmente mit einem Befestigungsteil versehen, das mit den Zwischenelementen kraftschlüssig und/oder formschlüssig und/oder stoffschlüssig verbunden ist. Eine solche Ausgestaltung ermöglicht eine einfache Montage und zuverlässige Befestigung der Segmente auf den Zwischenelementen. Um ein einfaches und exaktes Ausrichten der Segmente auf den Zwischenelementen sicherzustellen, ist das Befestigungsteil mit Vorsprüngen versehen und formschlüssig in eine entsprechend ausgestaltete Nut des Zwischenelements eingesetzt.

In Hinsicht auf eine kostenkünstige Fertigung ist es zweckmäßig, die Segmente mit gleicher Länge zu versehen. Um Vibrationen der Aufzugskabine zu vermeiden und ein geräuscharmes Bewegen des Primärteils auf den Schienen zu gewährleisten, sind vorteilhafterweise die Enden der Zwischenelemente abgeschrägt.

Schließlich wird in vorteilhafter Weiterbildung des erfindungsgemäßen Aufzugs vorgeschlagen, daß die Schiene auf wenigstens einer Seite mit äquidistant angeordneten Zähnen versehen ist, wobei eine durch die Zähne gebildete Zahnteilung der Schiene ein ganzzahliges Vielfaches der Polteilung des Sammlers ist. Durch das Versehen der Schiene mit Zähnen ergibt sich eine hohe magnetische Flußdichte zwischen Primärteil und Sekundärteil und damit eine vergleichsweise große Kraftdichte. Wird der Sekundärteil durch mehrere, beispielsweise nebeneinander angeordnete Schienen gebildet, ist es vorteilhaft, die Schienen derart anzuordnen, daß die Zahnteilungen der Schienen versetzt zueinander angeordnet sind. Denn auf diese Weise lassen sich auftretende Querkräfte minimieren.

Einzelheiten und weitere Vorteile des erfindungsgemäßen Aufzugs ergeben sich aus der folgenden Beschreibung bevorzugter Ausführungsbeispiele. In den zugehörigen Zeichnungen, welche die Ausführungsbeispiele lediglich schematisch darstellen, zeigen im einzelnen:
- Fig. 1: eine perspektivische Ansicht eines Aufzugs;
- Fig. 2a: eine perspektivische Ansicht eines Erregermoduls in einer ersten Ausführungsform;
- Fig. 2b: eine Vorderansicht des Erregermoduls gemäß Fig. 2a;
- Fig. 3a: eine perspektivische Ansicht eines Erregermoduls in einer zweiten Ausführungsform;
- Fig. 3b: eine Vorderansicht des Erregermoduls gemäß Fig. 3a;
- Fig. 4a: eine perspektivische Ansicht eines Erregermoduls in einer dritten Ausführungsform;
- Fig. 4b: eine Vorderansicht des Erregermoduls gemäß Fig. 4a;
- Fig. 5a: eine Darstellung der Größenverhältnisse von Erregermodulen und Segmenten einer Schiene;
- Fig. 5b: eine Darstellung gemäß Fig. 5a;
- Fig. 5c: eine Darstellung gemäß Fig. 5a;
- Fig. 6a: eine Darstellung des Verlaufs magnetischer Feldlinien bei zwei hintereinander angeordneten Erregermodulen und einer durchgehenden Schiene;
- Fig. 6b: eine Darstellung des Verlaufs magnetischer Feldlinien bei zwei hintereinander angeordneten Erregermodulen und einer segmentierten Schiene;
- Fig. 7: eine perspektivische Ansicht von unten auf ein mit einem Gleitschuh versehenes Erregermodul;
- Fig. 8: eine Stirnansicht von auf einem Zwischenelement befestigten Schienen.
- Fig. 9a: eine Darstellung des Kraftflusses bei miteinander verbundenen Segmenten des Sekundärteils;
- Fig. 9b: eine Darstellung gemäß Fig. 9a bei miteinander verbundenen Trägerelementen des Sekundärteils;
- Fig. 9c: eine Darstellung gemäß Fig. 9a bei miteinander verbundenen Zwischenelementen des Sekundärteils;
- Fig. 10: eine perspektivische Ansicht des Sekundärteils;
- Fig. 11: eine Stirnansicht des auf dem Sekundärteil geführten Primärteils;
- Fig. 12a: eine perspektivische Ansicht einer Schiene des Sekundärteils;
- Fig. 12b: eine vergrößerte Darstellung des in Fig. 12a mit XIIb gekennzeichneten Bereichs;
- Fig. 12c: eine Stirnansicht der mittels eines Befestigungsteils auf einem Trägerelement angeordneten Schiene;
- Fig. 13: eine perspektivische Ansicht einer weiteren Ausführungsform des Befestigungsteils;
- Fig. 14a: eine Stirnansicht des Erregermoduls gemäß Fig. 2b mit eingezeichneter Orientierung von Vortriebskraft und Querkraft;
- Fig. 14b: eine Draufsicht auf das Erregermodul gemäß Fig. 14a mit eingezeichneter Orientierung von Vortriebskraft und Querkraft;
- Fig. 15a: eine Vorderansicht des Erregermoduls gemäß Fig. 3b mit eingezeichneter Orientierung von Vortriebskraft und Querkraft;
- Fig. 15b: eine Draufsicht auf das Erregermodul gemäß Fig. 15a mit eingezeichneter Orientierung von Vortriebskraft und Querkraft;
- Fig. 16a: eine Vorderansicht auf das Erregermodul gemäß Fig. 4b mit eingezeichneter Orientierung von Vortriebskraft und Querkraft;
- Fig. 16b: eine Draufsicht auf das Erregermodul gemäß Fig. 16a mit eingezeichneter Orientierung von Vortriebskraft und Querkraft;
- Fig. 17a - 17l: verschiedene Anordnungen von Erregermodulen eines Antriebsmotors;
- Fig. 18a: eine Darstellung des quantitativen Verlaufs der Vortriebskraft bei ungeregelter Stromstärke;
- Fig. 18b: eine Darstellung des quantitativen Verlaufs der Stromstärke bei ungeregelter Stromstärke;
- Fig. 19a: eine Darstellung des quantitativen Verlaufs der Vortriebskraft bei geregelter Stromstärke;
- Fig. 19b: eine Darstellung des quantitativen Verlaufs der Stromstärke bei geregelter Stromstärke und
- Fig. 20: eine Darstellung der Regelung der das Erregermodul speisenden Stromstärke.

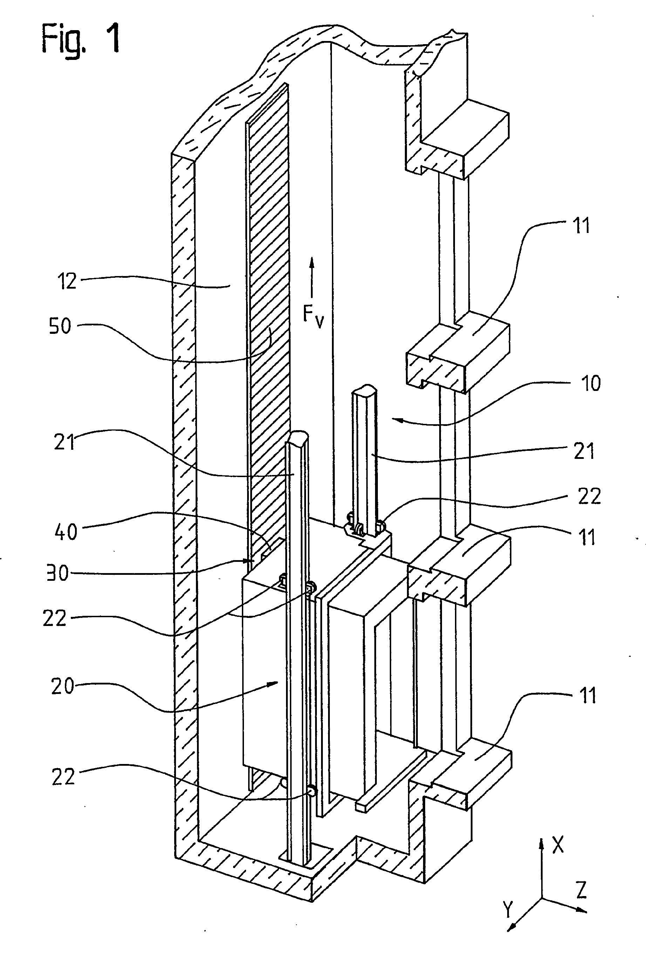

Bei dem in Fig. 1 dargestellten Aufzug ist eine Aufzugskabine 20 in einem sich über mehrere Etagen 11 erstreckenden Aufzugsschacht 10 verfahrbar angeordnet. Die Aufzugskabine 20 ist mit mehreren Führungsrollen 22 versehen, welche die Aufzugskabine 20 entlang in dem Aufzugsschacht 10 angeordneten Führungen 21 bewegen.
Die Aufzugskabine 20 wird von einem Antriebsmotor 30 direkt angetrieben. Zu diesem Zweck weist der als Transversalflußmaschine ausgestaltete Antriebsmotor 30 einen aktiven Primärteil 40 und einen passiven Sekundärteil 50 auf. Der Primärteil 40 ist an der Aufzugskabine 20 angeordnet, wohingegen der Sekundärteil 50 an einer Wandung 12 des Aufzugsschachts 10 befestigt und durch einen Luftspalt zu dem Primärteil 40 beabstandet ist. Unter dem Einfluß einer elektromagnetisch erzeugten Vortriebskraft Fᵥ ist der Primärteil 40 linear gegenüber dem Sekundärteil 50 bewegbar.

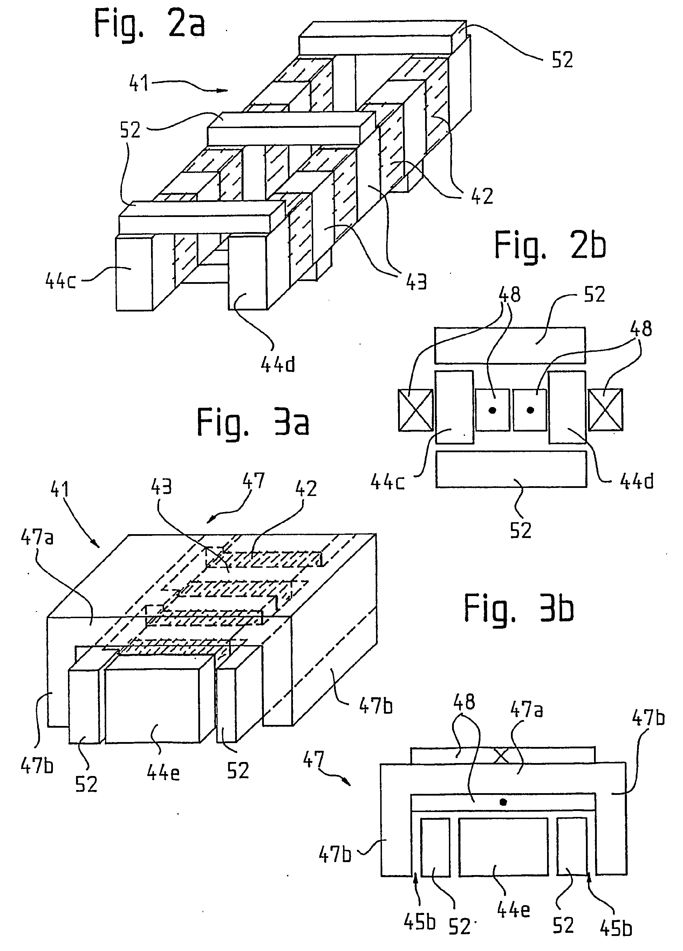

Wie insbesondere die Fig. 2a bis 4b erkennen lassen, weist der Primärteil 40 zum Erzeugen eines transversal zur Bewegungsrichtung x der Aufzugskabine 20 verlaufenden magnetischen Flusses ein Erregermodul 41 auf. Das Erregermodul 41 ist mit zumindest einem Sammler 44a bis 44e sowie mit zumindest einer in Bewegungsrichtung x der Aufzugskabine 20 verlaufenden Erregerwicklung 48 versehen. Der Sammler 44a bis 44e setzt sich aus mehreren abwechselnd angeordneten Permanentmagneten 42 und aus einem weichmagnetischen Werkstoff gefertigten Zwischengliedern 43 zusammen. Die Permanentmagnete 42 sind mit alternierender Polarität in dem Sammler 44a bis 44e angeordnet und bilden eine Polteilung.

Die in den Fig. 2a und 2b gezeigte Ausführungsform des Erregermoduls 41 weist zwei im wesentlichen l-förmig ausgebildete Sammler 44c, 44d auf, die parallel zueinander in Bewegungsrichtung x der Aufzugskabine 20 verlaufend angeordnet und jeweils mit der Erregerwicklung 48 versehen sind. In Hinsicht auf eine materialsparende Ausgestaltung kann die Rückführung der gewöhnlich aus Kupfer bestehenden Erregerwicklung 48 bei der Anordnung von mehreren Erregermodulen 41 genutzt werden, um einen benachbarten Sammler zu erregen.

Dagegen weist die in den Fig. 3a und 3b gezeigte Ausführungsform des Erregermoduls 41 ein den Sammler 44e an drei Seiten umgebendes Joch 47 auf, das sich aus einer mit der Erregerwicklung 48 versehenen Basisplatte 47a und zwei Schenkeln 47b zusammensetzt. Die Schenkel 47b sind jeweils durch einen Zwischenraum 45b von dem Sammler 44e beabstandet und erstrecken sich entlang zweier gegenüberliegenden Seiten des Sammlers 44e. In dem Zwischenraum 45b ist der als in Segmente 52 unterteilte Schiene 51 ausgebildete Sekundärteil 50 angeordnet. Das Joch 47 dient dazu, einen magnetischen Rückfluß von den Segmenten 52 der Schiene 51 zu dem Primärteil 40 zu gewährleisten. In einer alternativen Ausgestaltung kann das Erregermodul 41 zwei oder mehrere der Sammler 44e aufweisen. Für jeden zusätzlichen Sammler 44e weist das Joch 47 einen weiteren Schenkel 47b auf, um den magnetischen Rückfluß sicherzustellen. Sind mehrere Erregermodule 41 nebeneinander angeordnet, so kann das Joch 47 und die Erregerwicklung 48 derart ausgestaltet sein, daß das Joch 47 und/oder die Erregerwicklung 48 von mehreren Sammlern 44c zugleich genutzt werden. Eine leichtgewichtige und materialeinsparende Bauweise ist somit sichergestellt.

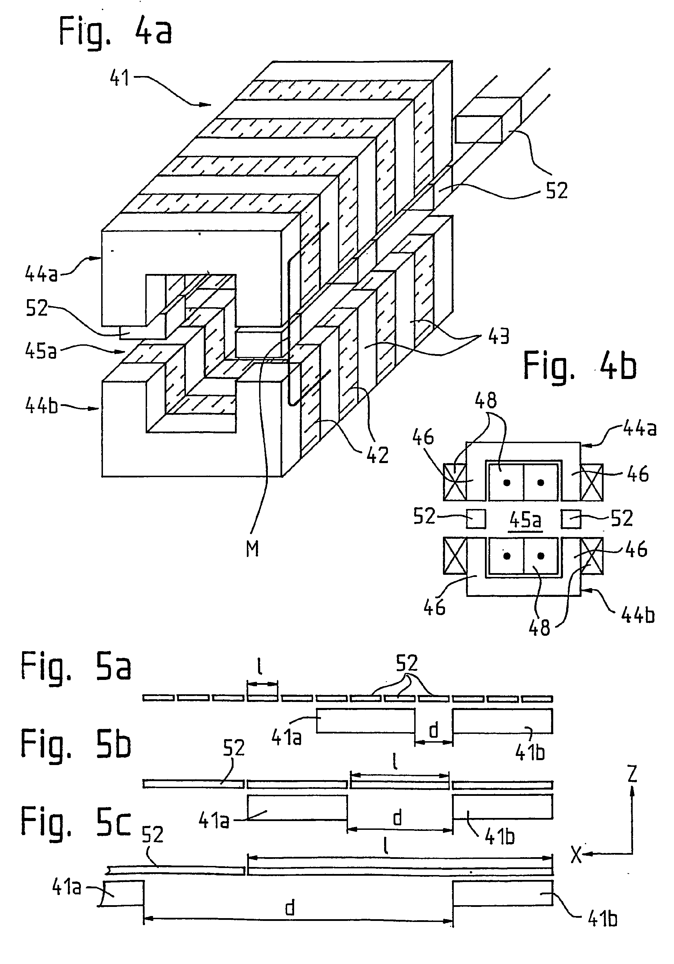

Bei der in den Fig. 4a und 4b gezeigten Ausführungsform des Erregermoduls 41 sind zwei im wesentlichen U-förmig ausgebildete Sammler 44a, 44b vorgesehen, die mit ihren offenen Seiten einander zugewandt und durch einen Zwischenraum 45a voneinander beabstandet angeordnet sind. Die Sammler 44a, 44b weisen Schenkel 46 auf, die jeweils mit der in Bewegungsrichtung x der Aufzugskabine 20 verlaufenden Erregerwicklungen 48 versehen sind. In dem Zwischenraum 45a sind die Segmente 52 der Schiene 51 angeordnet.

Wie aus Fig. 4a ersichtlich, ergibt sich bei Einspeisung eines Drehstroms in die Erregerwicklung 48 ein durch das Sekundärteil 50 fließender Magnetfluß M, der transversal zur Bewegungsrichtung x der Aufzugskabine 20 verläuft. Ein derartiger Magnetfluß M entsteht auch bei den Ausführungsformen des Erregermoduls 41 gemäß den Fig. 2a bis 3b. Die in den Fig. 2a und 2b gezeigte Ausführungsform unterscheidet sich von den übrigen Ausführungsformen des Erregermoduls 41 allerdings darin, daß die Segmente 52 der Schiene 51 nicht zwischen zwei Sammlern angeordnet sind, sondern die Sammler 44c, 44d zwischen den Segmenten 52 verlaufen. Für die Erzeugung eines transversal zur Bewegungsrichtung x der Aufzugskabine 20 verlaufenden magnetischen Flusses M ist diese Umkehr der Anordnung von Sammler 44c, 44d und Segmenten 52 ohne Belang.

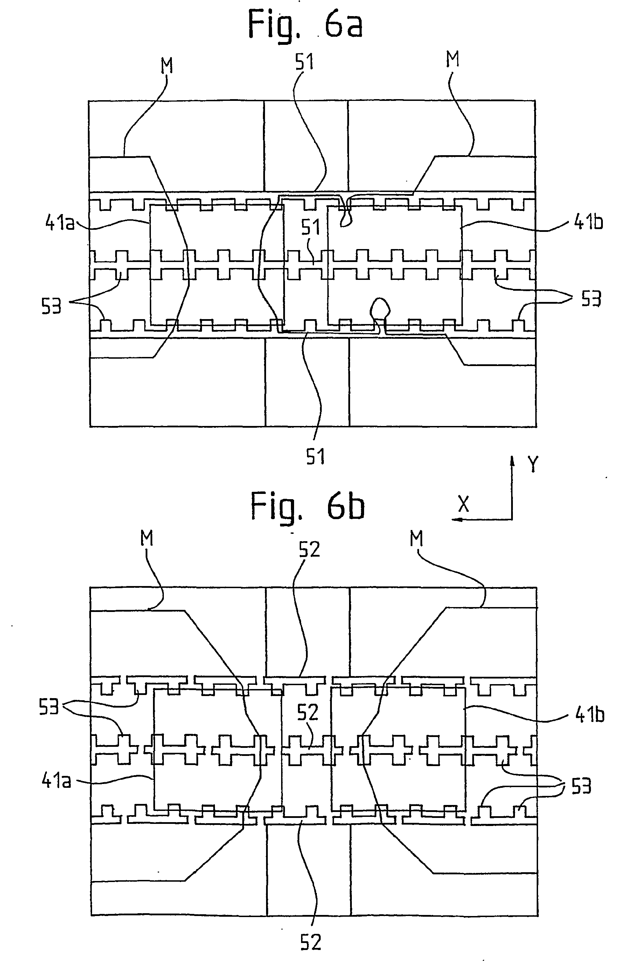

Die Fig. 5a bis 5c geben zu erkennen, daß die aus einem weichmagnetischen Werkstoff, wie beispielsweise Eisen oder Ferrit, gebildete Schiene 51 aus einer Vielzahl von in Bewegungsrichtung x der Aufzugskabine 20 voneinander beabstandeter Segmente 52 gleicher Länge I zusammengesetzt ist. Die Schiene 51 ist ferner mit einer Vielzahl von Zähnen 53 versehen, wie aus den Fig. 6a und 6b ersichtlich ist. Unbeschadet der Segmentierung der Schiene 51 in einzelne Segmente 52 sind die Zähne 53 äquidistant angeordnet. Die auf diese Weise gebildete Zahnteilung der Schiene 51 entspricht einem ganzzahligen Vielfachen, beispielsweise dem Zweifachen, der Polteilung der Sammler 44a bis 44e. Die Zähne 53 können auf einer Seite oder auf zwei Seiten der Schiene 51 angeordnet sein und erstrecken sich in transversaler Richtung. Wie aus den Fig. 6a und 6b weiterhin ersichtlich, kann der Sekundärteil aus mehreren Schienen 51 bestehen. Die Zähne 53 sind in diesem Fall derart angeordnet, daß die Zahnteilungen der Schienen 51 versetzt zueinander angeordnet sind.

Mehrere Erregermodule 41a, 41b sind in Bewegungsrichtung x der Aufzugskabine 20 derart hintereinander anzuordnen, daß der Abstand d zwischen zwei Erregermodulen 41a, 41b mindestens die Länge I des längsten Segments 52 beträgt, wie die Fig. 5a bis 5c zeigen. Auf diese Weise ist sichergestellt, daß unabhängig von der Länge der Segmente 52 zwei Erregermodule 41a, 41b nicht zugleich mit ein und demselben Segment 52 zusammenwirken. Eine Streuung des magnetischen Flusses M aufgrund einer Kopplung der durch Erregermodule 41a, 41b erzeugten Magnetfelder, wie in Fig. 6a anhand von durchgehenden Schienen 51 gezeigt, läßt sich somit weitgehend vermeiden, wie aus Fig. 6b ersichtlich ist.

Die Zwischenglieder 43 der Sammler 44a bis 44e, das Joch 47 des in den Fig. 3a und 3b gezeigten Erregermoduls 41 und die Schienen 51 stellen passive, das heißt lediglich feldführende, Bauteile dar. Um eine gezielte Feldführung zu erreichen, können diese passiven Bauteile als Lamellenpaket ausgebildet sein, das aus elektrisch gegeneinander isolierten Lamellen, beispielsweise aus Weicheisen, zusammengesetzt ist. Ein solches Lamellenpaket läßt sich zweckmäßigerweise durch Verbacken fertigen. In diesem Fall werden die einzelnen Lamellen einseitig oder beidseitig mit einer Leimschicht versehen und nach einem Aufeinanderstapeln unter Einwirkung von Druck und Wärme miteinander verklebt. Das Verbakken hat im Unterschied zu anderen Fertigungsverfahren, wie beispielsweise Schweißen, Stanzpaketieren oder Nieten, den Vorteil, daß ein die Führung des magnetischen Flusses M beeinträchtigender Kurzschluß zwischen zwei oder mehreren Lamellen vermieden wird.

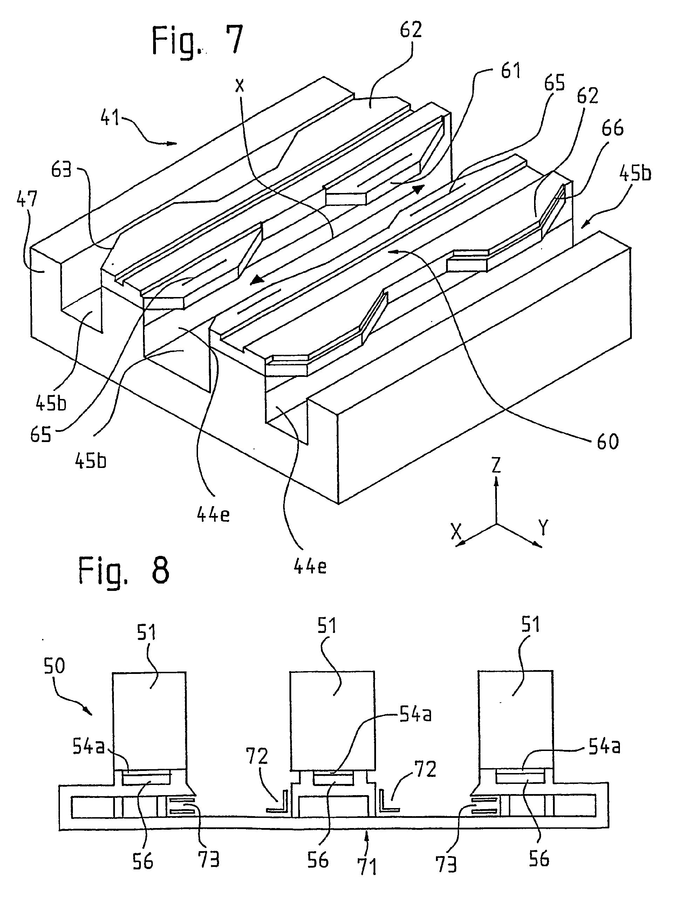

Das Erregermodul 41 kann mit Führungsrollen oder einem Gleitschuh 60 versehen sein, um eine zuverlässige Führung auf den Schienen 51 sicherzustellen. Wie in Fig. 7 anhand eines der in Fig. 3a und 3b gezeigten Ausführungsform ähnlichen Erregermoduls 41 gezeigt, ist der Gleitschuh 60 an der Unterseite des Sammlers 44e angeordnet. Der auf diese Weise zwischen dem Gleitschuh 60 und dem Joch 47 eingespannte Sammler 44e erfährt somit eine zuverlässige Befestigung. Der Gleitschuh 60 ist mit einer Gleitführungsfläche 61 für eine Führung in einer zu der Bewegungsrichtung x senkrechten Querrichtung y der Aufzugskabine 20 versehen. Darüber hinaus weist der Gleitschuh 60 eine Gleitführungsfläche 62 für eine Führung in einer zu der Bewegungsrichtung x und der Querrichtung y senkrechten Normalrichtung z der Aufzugskabine 20 auf. Um ein vibrationsarmes Einführen der Segmente 52 der Schiene 51 in den Zwischenraum 45b zu gewährleisten, ist die Gleitführungsfläche 61 für eine Führung in Querrichtung y mit Schrägen 63 versehen. Zu einer vibrationsarmen und damit geräuscharmen Führung des Erregermoduls 41 auf den Schienen 51 trägt ferner bei, daß in dem Gleitschuh 60 schlitzartige Ausnehmungen 65, 66 vorgesehen sind, die sich parallel zu den Gleitführungsflächen 61, 62 erstrecken. Aufgrund der Ausnehmungen 65, 66 sind die Gleitführungsflächen 61, 62 federnd ausgestaltet. Diese federnde Ausgestaltung gewährleistet, daß der zwischen Primärteil 40 und Sekundärteil 50 für eine Relativbewegung erforderliche Luftspalt während einer Bewegung des Erregermoduls 41 konstant bleibt.

In Fig. 8 ist ein zu dem in Fig. 7 gezeigten Erregermodul 41 korrespondierend ausgestaltetes Sekundärteil 50 dargestellt. Der Sekundärteil 50 weist drei Schienen 51 auf, die in die Zwischenräume 45b des Erregermoduls 41 eingreifen. Die Schienen 51 sind mittels eines in eine Nut 56 eingreifenden Befestigungsteils 54a auf einem Zwischenelement 71 angeordnet, das an der Wandung 12 des Aufzugsschachts 10 befestigt ist. Das Zwischenelement 71 ist mit Führungsflächen 72, 73 versehen, die mit den Geradführungsflächen 61, 62 des Gleitschuhs 60 für eine zuverlässige Führung des Erregermoduls 41 zusammenwirken.

Wie insbesondere aus Fig. 1 ersichtlich, wird die Aufzugskabine 20 durch den Antriebsmotor 30 direkt angetrieben. Ein Drahtseil, wie bei indirekt angetriebenen herkömmlichen Aufzügen, ist nicht erforderlich. Um die für eine Bewegung der Aufzugskabine 20 erforderliche Vortriebskraft Fᵥ zu verringern, kann dennoch ein mit der Aufzugskabine 20 verbundenes Gegengewicht vorgesehen werden. In diesem Fall ist es möglich, einen weiteren Primärteil 40 des Antriebsmotors 30 an dem Gegengewicht anzuordnen. Alternativ ist es auch möglich, nur einen Primärteil 40 vorzusehen, der an dem Gegengewicht befestigt ist.

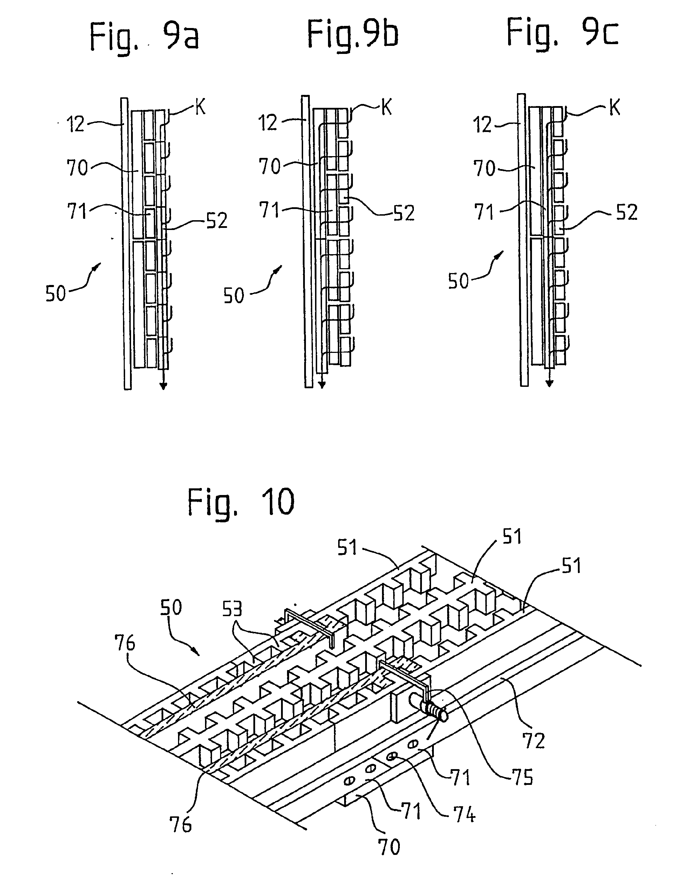

Wie in den Fig. 9a bis 9c zu erkennen ist, sind an der Wandung 12 des Aufzugsschachts 10 Trägerelemente 70 befestigt, auf denen die die Segmente 52 tragenden Zwischenelemente 71 angeordnet sind. Die Trägerelemente 70 und die Zwischenelemente 71 sind aus einem nicht-magnetischen Werkstoff, wie etwa Aluminium, gefertigt. Die Fig. 9a bis 9c veranschaulichen den Verlauf des in den Sekundärteil 50 eingeleiteten Kraftflusses K bei unterschiedlichen Anordnungen der Segmente 52, der Zwischenelemente 71 und der Trägerelemente 70. Bei der in Fig. 9a gezeigten Ausgestaltung sind nur die Segmente 52 miteinander verbunden. Der Kraftfluß K verläuft in diesem Fall überwiegend durch die Segmente 52. In Fig. 9b hingegen sind nur die Trägerelemente 70 miteinander verbunden. Der Kraftfluß K verläuft daher von den Segmenten 52 über die Zwischenelemente 71 in die Trägerelemente 70. Bei der in Fig. 9c gezeigten Ausgestaltung sind nur die Zwischenelemente 71 miteinander verbunden, so daß der Kraftfluß K von den Segmenten 52 in die Zwischenelemente 71 geleitet wird. Als besonders vorteilhaft hat sich die in Fig. 9c gezeigte Ausgestaltung erwiesen. Die Segmente 52 sind in diesem Fall voneinander beabstandet, so daß sich eine magnetische Kopplung zweier hintereinander angeordneter Erregermodule 41a, 41b vermeiden läßt, wie in Fig. 6b gezeigt. Zudem ermöglichen die miteinander verbundenen Zwischenelemente 71 eine präzise Anordnung und Ausrichtung der Segmente 52 und eine zuverlässige Führung des Erregermoduls 41. Die aus einem gleichen Werkstoff gefertigten Zwischenelemente 71 und Trägerelemente 70 verfügen über denselben thermischen Ausdehnungskoeffizienten, so daß thermisch bedingte Längenänderungen keine den Kraftfluß K beeinträchtigende Spannungen zwischen den Trägerelementen 70 und den Zwischenelementen 71 hervorrufen. Da der Kraftfluß K durch die Zwischenelemente 71 abgeleitet wird, nehmen die Trägerelemente 70 lediglich Knickkräfte auf. Je nach Anwendungsfall kann es daher ausreichend sein, die Trägerelemente 70 wegzulassen und die Zwischenelemente 71 unmittelbar an der Wandung 12 des Aufzugsschachts 10 zu befestigen.

Für eine vibrations- und geräuscharme Führung des Erregermoduls 41 auf den Schienen 51 ist eine akkurate Ausrichtung der Segmente 52 erforderlich. Wie in Fig. 10 zu erkennen ist, lassen sich die auf den Zwischenelementen 71 angeordneten Segmente 52 in der Querrichtung y durch die Zwischenelemente 71 ausrichten. Zu diesem Zweck sind die Zwischenelemente 71 mittels Schrauben 74 auf den Trägerelementen 70 befestigt. Für eine Ausrichtung in der Bewegungsrichtung x können Ausrichtplatten 76 verwendet werden, die mittels Schraubzwingen 75 mehrere hintereinander angeordnete Segmente 52 justieren.

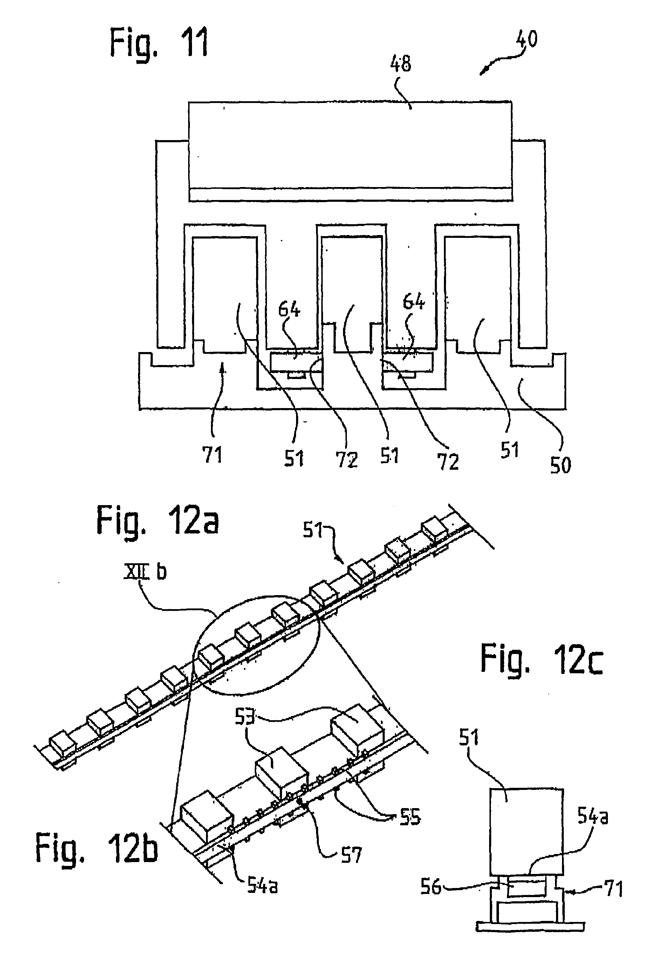

Fig. 10 läßt ferner Führungsflächen 72 erkennen, die eine Führung des Erregermoduls 41 in Querrichtung y gewährleisten. Die Führungsfläche 72 kann mit den in Fig. 7 gezeigten Gleitführungsflächen 61 des Gleitschuhs 60 oder mit in Fig. 11 gezeigten Führungsrollen 64 zusammenwirken. Das Vorsehen des Gleitschuhs 60 oder der Führungsrollen 64 hängt vom jeweiligen Anwendungsfall ab.

Die Fig. 12a bis 12c geben zu erkennen, daß die Schiene 51 mittels eines Befestigungsteils 54a auf dem Zwischenelement 71 befestigt ist. Das Befestigungsteil 54a ist auf einer Seite der Schiene 51 angeordnet, die nicht mit den Zähnen 53 versehen ist. Das Befestigungsteil 54a kann einstückiger Bestandteil der Schiene 51 oder ein separates Bauteil, das mit der Schiene 51 verbunden ist, sein. Das Befestigungsteil 54a greift in eine Nut 56 des Zwischenelements 71 ein und ist mit dem Zwischenelement 71 zumindest kraft- und formschlüssig verbunden. Zu diesem Zweck ist das Befestigungsteil 54a mit Vorsprüngen 55 versehen und mittels eines Preßsitzes in der korrespondierend ausgestalteten Nut 56 angeordnet. Alternativ oder zusätzlich kann das Zwischenelement 71 und das Befestigungsteil 54a mittels einer Schraubverbindung verbunden sein, die in eine Bohrung 57 des Befestigungsteils 54a eingreift. Je nach Anwendungsfall kann es ferner zweckmäßig sein, das Befestigungsteil 54a und das Zwischenelement 71 miteinander zu verschweißen.

Die formschlüssige Befestigung des Befestigungsteils 54a und damit der Schiene 51 auf dem Zwischenelement 71 bietet den Vorteil eines einfachen Ausrichtens der Schiene 51 beziehungsweise der Segmente 52 auf dem Zwischenelement 71 während der Montage. Darüber hinaus trägt das Befestigungsteil 54a zu einer wirksamen Übertragung des Kraftflusses K in das Zwischenelement 71 bei.

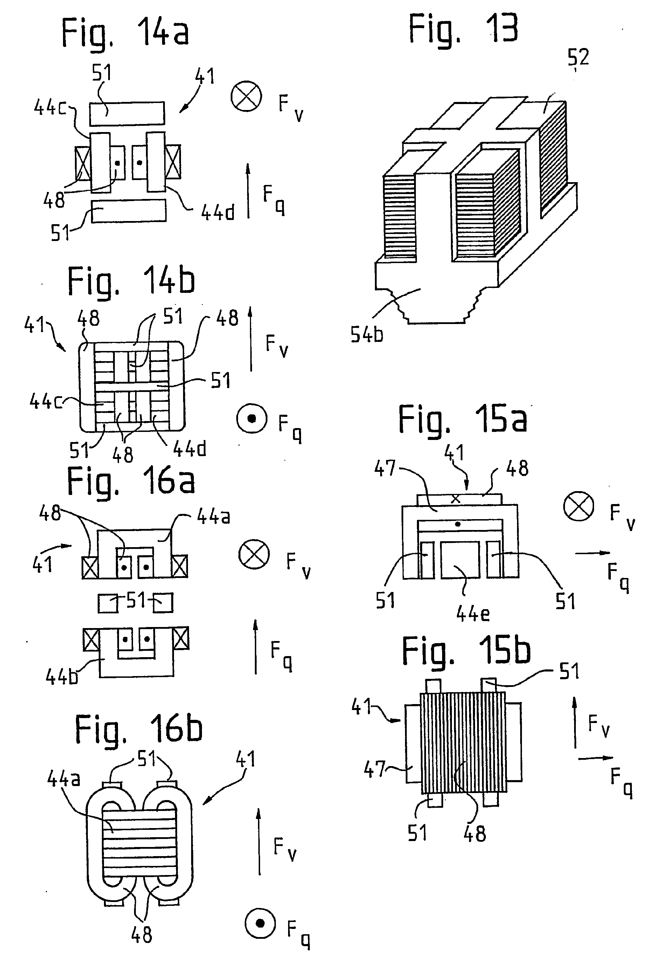

Sind die Segmente 52 oder die Zähne 53 als Lamellenpaket ausgebildet, so ist es zweckmäßig, ein Befestigungsteil 54b vorzusehen, das mit dem Zwischenelement 71 stoffschlüssig verbunden wird, beispielsweise durch Ultraschallschweißen, und das Lamellenpaket in Art einer Klammer hält. Ein solches Befestigungsteil 54b ist in Fig. 13 dargestellt. Das Befestigungsteil 54b ist in Hinsicht auf eine kostengünstige Fertigung aus einem vorzugsweise thermoplastischen Kunststoff gefertigt.

Neben der für die Bewegung der Aufzugskabine 20 erforderlichen Vortriebskraft Fᵥ erzeugt das Erregermodul 41 eine unvermeidliche Querkraft F_{q}. Die Orientierung der Vortriebskraft Fᵥ und der Querkraft F_{q} bei den unterschiedlichen Ausführungsformen des Erregermoduls 41 gemäß den Fig. 2a bis 4b ist in den Fig. 14a bis 16b gezeigt. Die Vortriebskraft Fᵥ und die Querkraft F_{q} sind nicht konstant, sondern unterliegen periodischen Schwankungen. Um eine annähernd konstante Vortriebskraft Fᵥ zu erhalten, ist es vorteilhaft, mehrere Erregermodule 41a bis 41d hintereinander anzuordnen, deren Versorgungsspannungen um einen vorgegebenen Phasenwinkel verschoben sind. Durch eine geeignete Wahl des Phasenwinkels können die durch die Erregermodule 41a bis 41d jeweils erzeugten Vortriebskräfte zu einer resultierenden Vortriebskraft F_{vR} überlagert werden, die in zeitlicher Hinsicht weitgehend konstant ist. Darüber hinaus ist es auf diese Weise möglich, die jeweiligen Querkräfte F_{q} zu kompensieren oder zumindest zu minimieren.

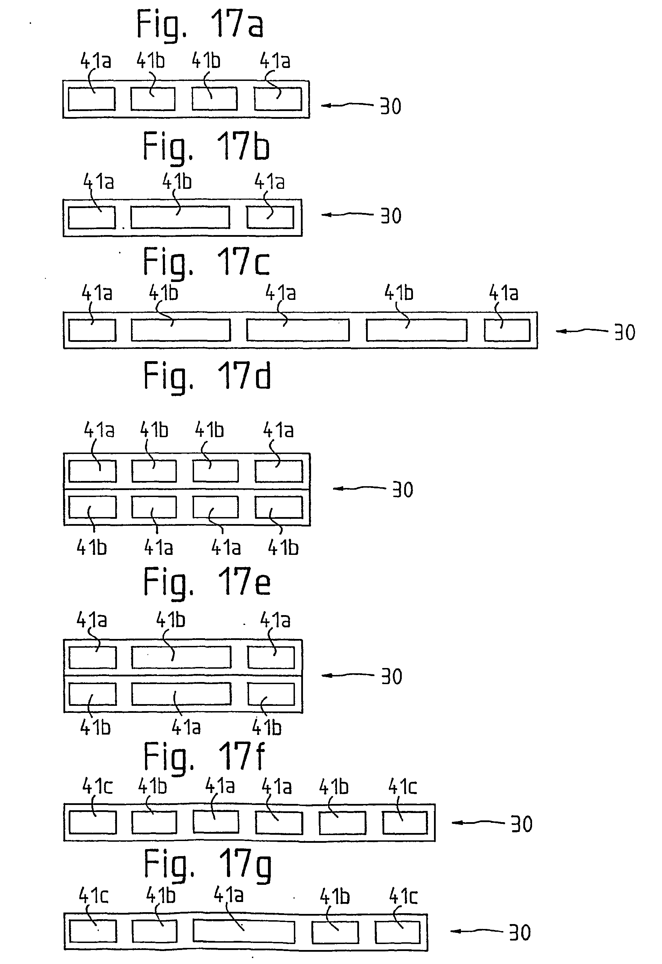

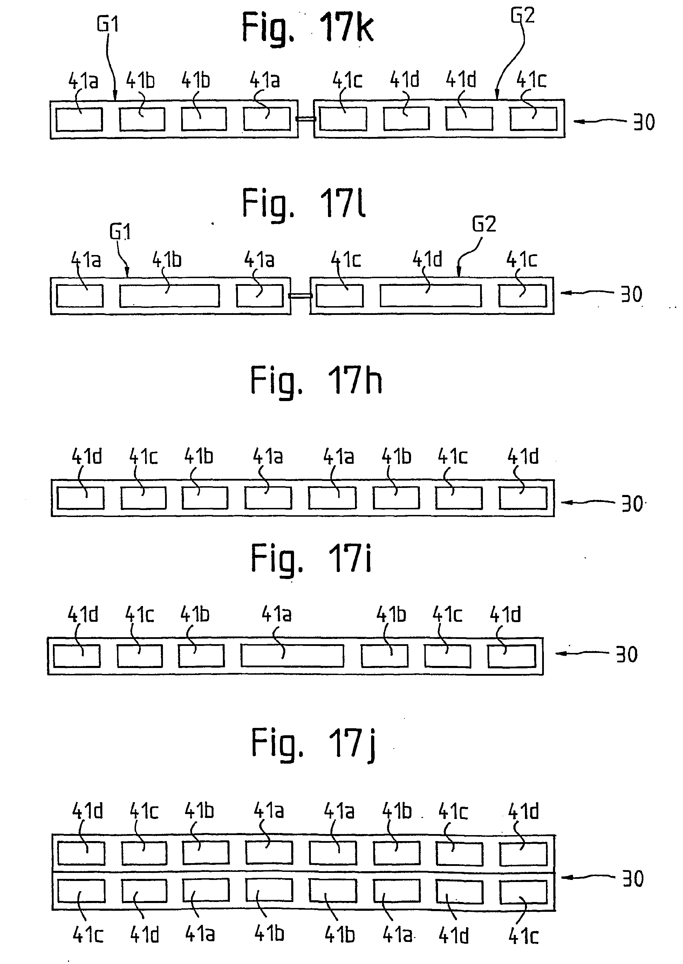

In den Fig. 17a bis 17l sind unterschiedliche Anordnungen mehrerer Erregermodule 41a bis 41d gezeigt. In Fig. 17a ist ein zweiphasiger Antriebsmotor 30 dargestellt, der sich aus insgesamt vier Erregermodulen 41a, 41b zusammensetzt, wobei die Versorgungsspannung des Erregermoduls 41a gegenüber der Versorgungsspannung des Erregermoduls 41b um einen Phasenwinkel von 90° verschoben ist. Der in Fig. 17b dargestellte Antriebsmotor 30 unterscheidet sich von dem Antriebsmotor 30 gemäß Fig. 17a dadurch, daß nur drei Erregermodule 41a, 41b vorgesehen sind, wobei das Erregermodul 41b die doppelte Länge des Erregermoduls 41a aufweist. Die in Fig. 17c gezeigte Ausgestaltung des Antriebsmotors 30 weist insgesamt fünf abwechselnd angeordnete Erregermodule 41a, 41b auf, wobei die mittigen Erregermodule 41a, 41b über die doppelte Länge verfügen wie die endseitigen Erregermodule 41a. Auf diese Weise ergibt sich ein höheres Leistungsvermögen des Antriebsmotors 30.

In den Fig. 17d und 17e sind Antriebsmotoren 30 gezeigt, die zwei nebeneinander angeordnete Erregermodule 41a, 41b aufweisen. Der Antriebsmotor gemäß Fig. 17d weist insgesamt acht Erregermodule 41a, 41b auf, wohingegen der Antriebsmotor 30 gemäß Fig. 17e bei gleichem Leistungsvermögen mit sechs Erregermodulen 41a, 41b auskommt, da die mittigen Erregermodule 41a, 41b über eine größere Länge verfügen. Um auftretende Querkräfte F_{q} zu kompensieren, sind Erregermodule 41a, 41b nebeneinander angeordnet, deren Versorgungsspannungen phasenverschoben sind.

Die Fig. 17f und 17g zeigen jeweils einen dreiphasigen Antriebsmotor 30. Der Antriebsmotor 30 gemäß Fig. 17f setzt sich aus insgesamt sechs Erregermodulen 41a bis 41c zusammen, wohingegen der Antriebsmotor 30 gemäß Fig. 17g über insgesamt fünf Erregermodule 41a bis 41c verfügt. Die Versorgungsspannungen der Erregermodule 41a bis 41c sind um einen Phasenwinkel von je 120° verschoben.

In den Fig. 17h und 17i ist ein vierphasiger Antriebsmotor 30 gezeigt. Der Antriebsmotor 30 gemäß Fig. 17h setzt sich aus insgesamt acht Erregermodulen 41a bis 41d zusammen, die in Bewegungsrichtung x hintereinander angeordnet sind und deren Versorgungsspannungen um einen Phasenwinkel von je 90° verschoben sind. Der Antriebsmotor 30 gemäß Fig. 17i unterscheidet sich von dem Antriebsmotor 30 gemäß Fig. 17h dadurch, daß zwei gleichphasige Erregermodule zu dem mittigen Erregermodul 41a zusammengefaßt sind. In Fig. 17j ist ein vierphasiger Antriebsmotor 30 gezeigt, der sich aus zwei Reihen von Erregermodulen 41a bis 41d zusammensetzt. Die Erregermodule 41a bis 41d sind erneut derart angeordnet, daß einander gegenüberliegende Erregermodule 41a, 41b; 41c, 41d ungleichphasig sind.

In den Fig. 17k und 17l ist ein vierphasiger Antriebsmotor 30 dargestellt, bei dem die Erregermodule 41a, 41b; 41c, 41d in zwei Gruppen G₁ und G₂ angeordnet sind. Die Versorgungsspannungen der Erregermodule 41a, 41b; 41c, 41d innerhalb einer Gruppe G₁, G₂ sind jeweils um einen Phasenwinkel von 90° verschoben, wobei die Versorgungsspannungen der Erregermodule 41a, 41b der ersten Gruppe G₁ gegenüber den Versorgungsspannungen der Erregermodule 41c, 41d der zweiten Gruppe G₂ um einen Phasenwinkel von 45° verschoben sind. Dies hat zur Folge, daß vier um je einen Phasenwinkel von 45° verschobene Phasen vorliegen, welche die Vortriebskraft Fᵥ generieren. Durch die gruppierte Anordnung der Erregermodule 41a bis 41d läßt sich eine in konstruktiver Hinsicht einfache Führung der Erregermodule 41a bis 41d auf den Schienen 51 erreichen. Grund hierfür ist, daß durch die Aufteilung der Erregermodule 41a bis 41d in die Gruppen G₁ und G₂ die zu führende Fläche des Antriebsmotors 30 verkürzt wird.

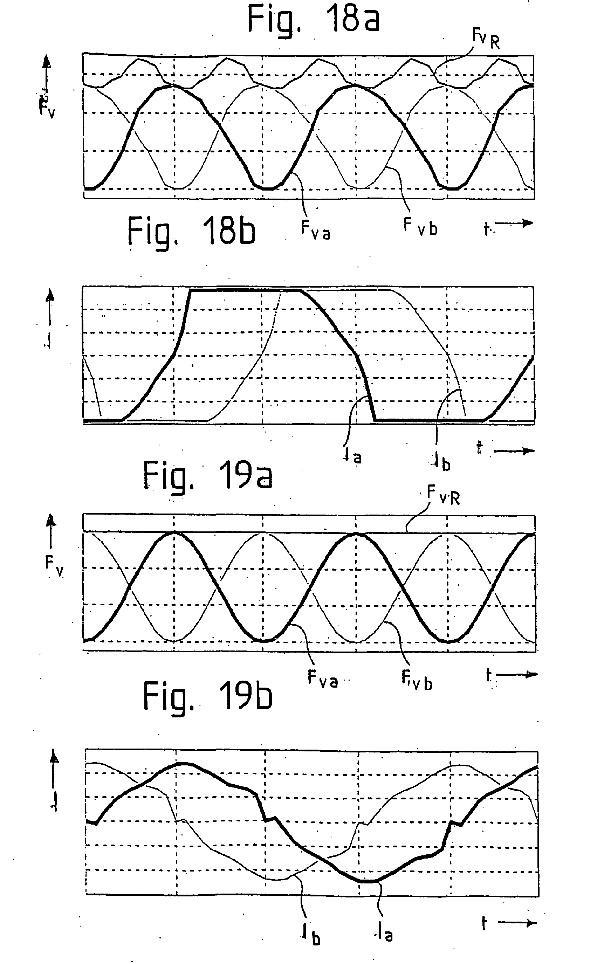

Bei dem Vorhandensein mehrerer Erregermodule 41a, 41b ergibt sich die die Aufzugskabine 20 antreibende Vortriebskraft F_{vR} als Resultierende der durch die einzelnen Erregermodule 41a, 41b erzeugten Vortriebskräfte Fᵥₐ, F_{vb}, wie in Fig. 18a zu erkennen ist. Der Verlauf der einzelnen Vortriebskräfte Fᵥₐ, F_{vb} entspricht bei einer herkömmlichen Versorgungsspannung mit einem annähernd trapezförmigen Stromverlauf, wie in Fig. 18b gezeigt, nur annähernd der quadratischen Form einer Sinusschwingung. Die resultierende Vortriebskraft F_{vR} unterliegt daher unerwünschten Schwankungen. Um eine konstante Vortriebskraft F_{vR} zu erreichen, ist es daher erforderlich, daß die einzelnen Vortriebskräfte Fᵥₐ, F_{vb} der Erregermodule 41a, 41b exakt der quadratischen Form einer Sinusschwingung entsprechen, wie in Fig. 19a zu erkennen ist. Ein derartiger Verlauf der Vortriebskräfte Fᵥₐ, F_{vb} der einzelnen Erregermodule 41a, 41b ergibt sich dann, wenn die in die Erregermodule 41a, 41b eingespeisten Stromstärken Iₐ, I_{b} geregelt werden. Fig. 19b zeigt den Verlauf der Stromstärken Iₐ, I_{b}, die derart geregelt sind, daß der Verlauf der von den Erregermodulen 41a, 41b erzeugten Vortriebskräfte Fᵥₐ, F_{vb} jeweils die quadratische Form einer Sinusschwingung aufweisen.

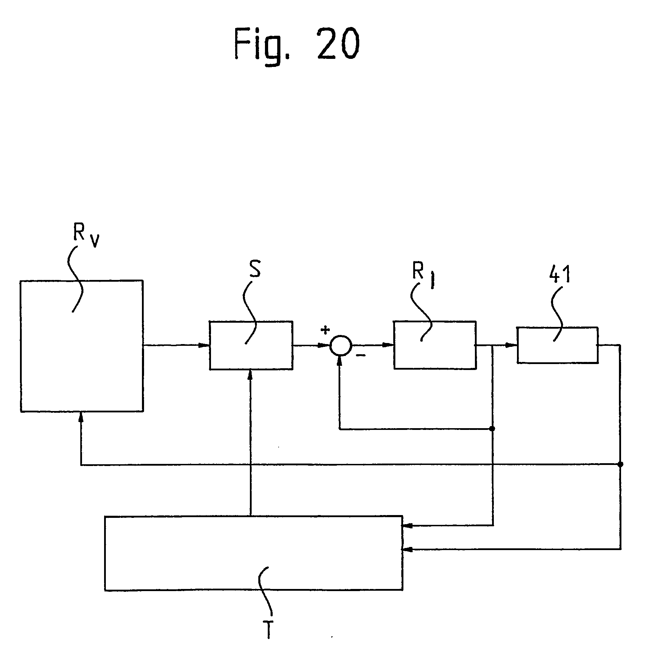

In Fig. 20 ist ein Regelkreis dargestellt, der die Regelung der Stromstärke I veranschaulicht. In dem Regelkreis sind neben dem Erregermodul 41 ein Stromregler Rₗ, ein Sollwertgeber S, ein Positions- oder Geschwindigkeitsregler Rᵥ und eine Tabelle T vorhanden. Anhand der Tabelle T läßt sich der Sollwert des Stroms I in Abhängigkeit von der erforderlichen Vortriebskraft Fᵥ und der Geschwindigkeit sowie der Position der Aufzugskabine 20 vorgeben. Der Sollwert des Stroms I wird zudem durch den Geschwindigkeitsregler Rᵥ beeinflußt. Der Stromregler Rₗ regelt dann die dem Erregermodul 41 zuzuführende Stromstärke I entsprechend dem vorgegebenen Sollwert.

Der zuvor beschriebene Aufzug zeichnet sich bei verhältnismäßig geringen Herstellungskosten durch ein vergleichsweise hohes Leistungsvermögen des die Aufzugskabine 20 antreibenden Antriebsmotors 30 aus. Ursache hierfür ist in erster Linie die Ausgestaltung des Antriebsmotors 30 als Transversalflußmaschine mit dem Primärteil 40 und dem Sekundärteil 50. Durch die Ausbildung des Sekundärteils 50 als in Segmente 52 aufgeteilte Schiene 51 läßt sich ein wirksamer Magnetfluß M in transversaler Richtung erreichen. Nicht zuletzt läßt sich durch die oben beschriebenen Anordnungen mehrerer Erregermodule 41a bis 41d und der Regelung der in ein Erregermodul 41 einzuspeisenden Stromstärke I eine konstante Vortriebskraft Fᵥ sicherstellen.

## Patentansprüche

1. Aufzug, insbesondere zum Transportieren von Personen, mit einem Aufzugsschacht (10), einer in dem Aufzugsschacht (10) geführten Aufzugskabine (20) und einem die Aufzugskabine (20) direkt antreibenden Antriebsmotor (30), wobei der Antriebsmotor (30) ein an der Aufzugskabine (20) angeordnetes aktives Primärteil (40) und ein stationär im Aufzugsschacht (10) angeordnetes und durch einen Luftspalt zu dem Primärteil (40) beabstandetes passives Sekundärteil (50) aufweist,
**dadurch gekennzeichnet,**
**daß** der Antriebsmotor (30) als Transversalflußmaschine ausgestaltet ist, der Primärteil (40) ein Erregermodul (41) zum Erzeugen eines transversal zur Bewegungsrichtung der Aufzugskabine (20) verlaufenden magnetischen Flusses aufweist, mit Permanentmagneten (42) im Primärteil (40), welches Primärteil (40) sich unter dem Einfluß einer elektromagnetischen Vortriebskraft (Fv) linear gegenüber dem Sekundärteil (50) bewegt, wobei das Sekundärteil (50) wenigstens eine aus einem weichmagnetischen Werkstoff gefertigte Schiene (51) aufweist, die in eine Vielzahl von Segmenten (52) vorgegebener Länge (I) unterteilt ist.

2. Aufzug nach Anspruch 1,
**dadurch gekennzeichnet, daß** die Segmente (52) mittels Zwischenelementen (71) an einer Wandung (12) des Aufzugsschachts (10) befestigt sind.

3. Aufzug nach Anspruch 2,
**dadurch gekennzeichnet, daß** die Zwischenelemente (71) auf an der Wandung (12) des Aufzugsschachts (10) befestigten Trägerelementen (70) angeordnet sind,
und/oder
daß die Zwischenelemente (71) mit einer Führungsfläche (72) für eine Führung des Primärteils (40) in einer zu der Bewegungsrichtung (x) senkrechten Querrichtung (y) der Aufzugskabine (20) versehen sind,
und/oder
daß die Zwischenelemente (71) mit einer Führungsfläche (73) für eine Führung des Primärteils (40) in einer zu der Bewegungsrichtung (x) und der Querrichtung (y) senkrechten Normalrichtung (z) der Aufzugskabine (20) versehen sind,
und/oder
daß die Segmente (52) mit einem Befestigungsteil (54a, 54b) versehen sind, das mit den Zwischenelementen (71) kraft-schlüssig und/oder formschlüssig und/oder stoffschlüssig verbunden ist,
und/oder
daß die Enden der Zwischenelemente (71) abgeschrägt sind.

4. Aufzug nach Anspruch 3,
**dadurch gekennzeichnet, daß** die Zwischenelemente (71) und die Trägerelemente (70) aus dem gleichen Werkstoff gefertigt sind,
und/oder
daß die Zwischenelemente (71) und die Trägerelemente (70) aus einem nichtmagnetischen Werkstoff, vorzugsweise Aluminium, gefertigt sind.

5. Aufzug nach einem der Ansprüche 2 bis 4,
**dadurch gekennzeichnet, daß** die Segmente (52) miteinander verbunden und die Zwischenelemente (71) in Bewegungsrichtung (x) der Aufzugskabine (20) voneinander beabstandet sind,
oder
daß die Segmente (52) in Bewegungsrichtung (x) der Aufzugskabine (20) voneinander beabstandet und die Zwischenelemente (71) miteinander verbunden sind.

6. Aufzug nach Anspruch 3,
**dadurch gekennzeichnet, daß** die Trägerelemente (70) in Bewegungsrichtung (x) der Aufzugskabine (20) voneinander beabstandet sind,
oder
daß die Segmente (52) und die Zwischenelemente (71) in Bewegungsrichtung (x) der Aufzugskabine (20) voneinander beabstandet und die Trägerelemente (70) miteinander verbunden sind.

7. Aufzug nach Anspruch 3,
**dadurch gekennzeichnet, daß** das Befestigungsteil (54a) mit Vorsprüngen (55) versehen und formschlüssig in eine entsprechend ausgestaltete Nut (56) des Zwischenelements (71) eingesetzt ist.

8. Aufzug nach einem der Ansprüche 1 bis 7,
**dadurch gekennzeichnet, daß** die Segmente (52) gleiche Länge (I) haben,
und/oder
daß die Schiene (51) auf wenigstens einer Seite mit äquidistant angeordneten Zähnen (53) versehen ist, wobei eine durch die Zähne (53) gebildete Zahnteilung der Schiene (51) ein ganzzahliges Vielfaches einer Polteilung des Primärteils (40) ist,
und/oder
daß mehrere Schienen (51) über die durch die Zähne (53) gebildete Zahnteilung versetzt zueinander angeordnet sind.

9. Aufzug nach Anspruch 1,
**dadurch gekennzeichnet, daß** zum Erzeugen eines transversal zur Bewegungsrichtung (x) der Aufzugskabine (20) verlaufenden magnetischen Flusses der Primärteil (40) ein Erregermodul (41) aufweist, das mit zumindest einem aus abwechselnd angeordneten Magneten (42) und weichmagnetischen Zwischengliedern (43) zusammengesetzten Sammler (44a, 44b; 44c, 44d; 44e) sowie mit zumindest einer in Bewegungsrichtung (x) der Aufzugskabine (20) verlaufenden Erregerwicklung (48) versehen ist, wobei die Magnete (42) zur Bildung einer vorgegebenen Polteilung mit alternierender Polarität in dem Sammler (44a, 44b; 44c, 44d; 44e) angeordnet sind.

10. Aufzug nach Anspruch 9,
**gekennzeichnet durch** zwei im wesentlichen U-förmig ausgebildete Sammler (44a, 44b), die mit ihren offenen Seiten einander zugewandt und **durch** einen Zwischenraum (45a) voneinander beabstandet angeordnet sind, wobei die Sammler (44a, 44b) Schenkel (46) aufweisen, die mit der Erregerwicklung (48) versehen sind, und wobei in dem Zwischenraum (45a) der Sekundärteil (50) angeordnet ist,
oder
**durch** zwei im wesentlichen I-förmig ausgebildete Sammler (44c, 44d), die parallel zueinander in Bewegungsrichtung (x) der Aufzugskabine (20) verlaufend angeordnet und jeweils mit der Erregerwicklung (48) versehen sind,
oder
**durch** ein den Sammler (44e) zumindest teilweise umgebendes Joch (47) für einen magnetischen Rückfluß von dem Sekundärteil (50) zu dem Primärteil (40), wobei das Joch (47) eine mit der Erregerwicklung (48) versehene Basisplatte (47a) und wenigstens zwei Schenkel (47b) aufweist, wobei sich die Schenkel (47b) **durch** einen Zwischenraum (45b) von dem Sammler (44e) beabstandet entlang zweier gegenüberliegenden Seiten des Sammlers (44e) erstrecken und wobei in dem Zwischenraum (45b) der Sekundärteil (50) angeordnet ist.

11. Aufzug nach einem der Ansprüche 9 bis 10,
**gekennzeichnet durch** wenigstens zwei einphasige Erregermodule (41a, 41b), deren Versorgungsspannungen um einen vorgegebenen Phasenwinkel verschoben sind und die in Bewegungsrichtung (x) der Aufzugskabine (20) in einem vorgegebenen Abstand (d) hintereinander oder nebeneinander angeordnet sind.

12. Aufzug nach Anspruch 11,
**dadurch gekennzeichnet, daß** die Schiene (51) in eine Vielzahl von in Bewegungsrichtung (x) der Aufzugskabine (20) voneinander beabstandeter Segmente (52) vorgegebener Länge (I) unterteilt ist, wobei der Abstand (d) zwischen den Erregermodulen (41a, 41b) mindestens die Länge (I) des längsten Segments (52) beträgt.

13. Aufzug nach einem der Ansprüche 10 bis 12,
**dadurch gekennzeichnet, daß** die Zwischenglieder (43) des Primärteils (40) und/oder das Joch (47) und/oder die Schiene (51) als Lamellenpaket ausgebildet sind, wobei das Lamellenpaket aus elektrisch gegeneinander isolierten Lamellen, die aus Weicheisen bestehen, zusammengesetzt ist.

14. Aufzug nach Anspruch 13,
**dadurch gekennzeichnet, daß** das Lamellenpaket durch Verbacken gefertigt ist.

15. Aufzug nach einem der Ansprüche 9 bis 14,
**dadurch gekennzeichnet, daß** das Erregermodul (41) mit Führungsrollen (64) oder mit einem Gleitschuh (60) versehen ist, wobei der Gleitschuh (60) wenigstens eine Gleitführungsfläche (61) für eine Führung in einer zu der Bewegungsrichtung (x) senkrechten Querrichtung (y) der Aufzugskabine (20) und/oder wenigstens eine Gleitführungsfläche (62) für eine Führung in einer zu der Bewegungsrichtung (x) und der Querrichtung (y) senkrechten Normalrichtung (z) der Aufzugskabine (20) aufweist.

16. Aufzug nach Anspruch 15,
**dadurch gekennzeichnet, daß** die Gleitführungsflächen (61, 62) federnd ausgestaltet sind,
und/oder
daß die Gleitführungsfläche (61) für eine Führung in Querrichtung (y) mit Schrägen (63) zum Einführen der Schiene (50) in das Erregermodul (41) versehen ist.

17. Aufzug nach einem der Ansprüche 1 bis 16,
**dadurch gekennzeichnet, daß** die Aufzugskabine (20) mit einem in dem Aufzugsschacht (10) gegensinnig zu der Aufzugskabine (20) bewegten Gegengewicht verbunden ist, wobei der Primärteil (40) des Antriebsmotors (30) zusätzlich oder anstelle an der Aufzugskabine (20) an dem Gegengewicht angeordnet ist,
und/oder
daß Führungsmittel (21, 22) zur Führung der Aufzugskabine (20) in dem Aufzugsschacht (10) vorgesehen sind.

18. Aufzug nach einem der Ansprüche 1 bis 17,
**dadurch gekennzeichnet,**
**daß** für den Erhalt einer annährend konstanten Vortriebskraft (Fv) der Primärteil (40) wenigstens zwei einphasige und nebeneinander oder in Bewegungsrichtung (x) der Aufzugskabine (20) hintereinander angeordnete Erregermodule (41a, 41b, 41c, 41d) aufweist, die einen transversal zur Bewegungsrichtung (x) der Aufzugskabine (20) verlaufenden magnetischen Fluß (M) erzeugen und deren Versorgungsspannungen um einen vorgegebenen Phasenwinkel verschoben sind.

19. Aufzug nach Anspruch 18,
**dadurch gekennzeichnet, daß** drei Erregermodule (41a, 41b, 41c) in Bewegungsrichtung (x) der Aufzugskabine (20) hintereinander angeordnet sind, deren Versorgungsspannungen um einen Phasenwinkel von je 120° verschoben sind,
oder
daß vier Erregermodule (41a, 41b, 41c, 41d) in Bewegungsrichtung (x) der Aufzugskabine (20) hintereinander angeordnet sind, deren Versorgungsspannungen um einen Phasenwinkel von je 90° verschoben sind.

20. Aufzug nach einem der Ansprüche 18 bis 19,
**dadurch gekennzeichnet, daß** die Erregermodule (41a, 41b; 41c, 41d) in wenigstens zwei Gruppen (G1, G2) angeordnet sind, wobei die Versorgungsspannungen der Erregermodule (41a, 41b; 41c, 41d) innerhalb einer Gruppe (G1, G2) jeweils um einen Phasenwinkel von mindestens 90° verschoben sind und wobei die Versorgungsspannungen der Erregermodule (41a, 41b) der ersten Gruppe (G1) gegenüber den Versorgungsspannungen der Erregermodule (41c, 41d) der zweiten Gruppe (G2) um einen Phasenwinkel von 45° verschoben sind.

21. Aufzug nach einem der Ansprüche 18 bis 20,
**dadurch gekennzeichnet, daß** in einem mittigen Abschnitt des Antriebsmotors (30) gleichphasige Erregermodule (41a, 41a; 41b, 41b; 41d, 41d) in Bewegungsrichtung (x) der Aufzugskabine (20) hintereinander angeordnet sind,
und/oder
daß ungleichphasige Erregermodule (41a, 41b) in einer zu der Bewegungsrichtung (x) senkrechten Querrichtung (y) der Aufzugskabine (20) nebeneinander angeordnet sind.

22. Aufzug nach einem der Ansprüche 18 bis 21,
**dadurch gekennzeichnet, daß** gleichphasige Erregermodule (41a, 41a; 41b, 41b; 41d, 41d) zu einer Einheit zusammengefaßt sind, die der zwei- oder mehrfachen Länge anderer Erregermodule (41b, 41a; 41c) des Antriebsmotors (30) entspricht,
und/oder
daß eine Regelung der in die Erregermodule (41a, 41b) eingespeisten Stromstärke (Ia, Ib) erfolgt, wobei die Stromstärke (Ia, Ib) der Erregermodule (41a, 41b) derart geregelt wird, daß der Verlauf der von den Erregermodulen (41a, 41b) erzeugten Vortriebskraft (Fva, Fvb) jeweils die quadratische Form einer Sinusschwingung aufweist.

## Claims

1. Lift, particularly for transporting persons, with a lift shaft (10), a lift cage (20) guided in the lift shaft (10) and a drive motor (30) directly driving the lift cage (20), wherein the drive motor (30) comprises an active primary part (40) arranged at the lift cage (20) and a passive secondary part (50) arranged in stationary position in the lift shaft (10) and spaced from the primary part (40) by an air gap, **characterised in that** the drive motor (30) is formed as a transverse flux motor, the primary part (40) comprises an excitation module for generating a magnetic flux extending transversely to the movement direction of the lift cage (20), with permanent magnets (42) in the primary part, which primary part (40) moves linearly relative to the secondary part (50) under the influence of an electromagnetic propulsive force (Fᵥ), wherein the secondary part (50) comprises at least one rail (51) which is made of a soft magnetic material and which is subdivided into a plurality of segments (52) of predetermined length (1).

2. Lift according to claim 1, **characterised in that** the segments (52) are fastened to a wall (12) of the lift shaft (10) by means of intermediate elements (71).

3. Lift according to claim 2, **characterised in that** the intermediate elements (71) are arranged on support elements (70) fastened to the wall (12) of the lift shaft (10) and/or that the intermediate elements (71) are provided with a guide surface (72) for guidance of the primary part (40) in a transverse direction (y), which is perpendicular to the movement direction (x), of the lift cage (20) and/or that the intermediate elements (71) are provided with a guide surface (73) for guidance of the primary part (40) in a normal direction (z), which is perpendicular to the movement direction (x) and the transverse direction (y), of the lift cage (20) and/or that the segments (52) are provided with a fastening part (54a, 54b) which is connected with the intermediate elements (71) in force-locking and/or shape-locking and/or material-locking manner and/or that the ends of the intermediate elements (71) are chamfered.

4. Lift according to claim 3, **characterised in that** the intermediate elements (71) and the support elements (70) are made from the same material and/or that the intermediate elements (71) and the support elements (70) are made from a non-magnetic material, preferably aluminium.

5. Lift according to one of claims 2 to 4, **characterised in that** the segments (52) are connected together and the intermediate elements (71) are spaced apart in the direction (x) of movement of the lift cage (20) or that the segments (52) are spaced apart in the direction (x) of movement of the lift cage (20) and the intermediate elements (71) are connected together.

6. Lift according to claim 3, **characterised in that** the support elements (70) are spaced apart in the direction (x) of movement of the lift cage (20) or that the segments (52) and the intermediate elements (71) are spaced apart in the direction (x) of movement of the lift cage (20) and the support elements (70) are connected together.

7. Lift according to claim 3, **characterised in that** the fastening part (54a) is provided with projections (55) and inserted in shape-locking manner into a correspondingly formed groove (56) of the intermediate element (71).

8. Lift according to one of claims 1 to 7, **characterised in that** the segments (52) have the same length (1) and/or that the rail (51) is provided on at least one side with equidistantly arranged teeth (53), wherein a tooth pitch, which is formed by the teeth (53), of the rail (51) is an integral multiple of a pole pitch of the primary part (40) and/or that several rails (51) are arranged to be offset relative to one another by way of the tooth pitch formed by the teeth (53).

9. Lift according to claim 1, **characterised in that** for producing a magnetic flux running transversely to the direction (x) of movement of the lift cage (20) the primary part (40) comprises an excitation module (41) which is provided with at least one collector (44a, 44b; 44c, 44d; 44e), which is composed of magnets (42) and soft magnetic intermediate elements (43) arranged in alternation, as well as with at least one excitation winding (48) extending in the direction (x) of movement of the lift cage (20), wherein the magnets (42) are arranged in the collector (44a, 44b; 44c, 44d; 44e) for formation of a predetermined pole pitch with alternating polarity.

10. Lift according to claim 9, **characterised by** two collectors (44a, 44b) which are formed to be substantially U-shaped and face one another by their open sides and which are arranged to be spaced apart by an intermediate space (45a), wherein the collectors (44a, 44b) have limbs (46) which are provided with the excitation winding (48) and wherein the secondary part (50) is arranged in the intermediate space (45a) or by two collectors (44c, 44d) which are formed to be substantially I-shaped and are arranged to extend parallel to one another in the direction (x) of movement of the lift cage (20) and which are each provided with the excitation winding (48) or by a yoke (47), which at least partially surrounds the collector (44e), for a magnetic return flux from the secondary part (50) to the primary part (40), wherein the yoke (47) comprises a base plate (47a), which is provided with the excitation winding (48), and at least two limbs (47b), wherein the limbs (47b) extend through an intermediate space (45b) at a spacing from the collector (44e) along two opposite sides of the collector (44d) and wherein the secondary part (50) is arranged in the intermediate space (45b).

11. Lift according to one of claims 9 and 10, **characterised by** at least two single-phase excitation modules (41a, 41b), the supply voltages of which are displaced by a predetermined phase angle and which are arranged at a predetermined spacing (d) one after the other or one adjacent to the other in the direction (x) of movement of the lift cage (20).

12. Lift according to claim 7, **characterised in that** the rail (51) is subdivided into a plurality of segments (52) of predetermined length (I) spaced apart in the direction (x) of movement of the lift cage (20), wherein the spacing (d) between the excitation modules (41a, 41b) amounts to at least the length (I) of the longest segment (52).

13. Lift according to one of claims 10 to 12, **characterised in that** the intermediate elements (43) of the primary part (40) and/or the yoke (47) and/or the rail (51) is or are constructed as a plate stack, wherein the plate stack is composed of mutually electrically insulated plates consisting of soft iron.

14. Lift according to claim 13, **characterised in that** the plate stack is produced by cementing.

15. Lift according to one of claims 9 to 14, **characterised in that** the excitation module (41) is provided with guide rollers (64) or with a slide shoe (60), wherein the slide shoe (60) has at least one sliding guide surface (61) for guidance in a transverse direction (y), which is perpendicular to the movement direction (x), of the lift cage (20) and/or at least one sliding guide surface (62) for guidance in a normal direction (z), which is perpendicular to the movement direction (x) and the transverse direction (y), of the lift cage (20).

16. Lift according to claim 15, **characterised in that** the sliding guide surfaces (61, 62) are formed to be resilient and/or that the sliding guide surface (61) for guidance in transverse direction (y) is provided with chamfers (63) for introducing the rail (50) into the excitation module (41).

17. Lift according to one of claims 1 to 16, **characterised in that** the lift cage (20) is connected with a counterweight moved in the lift shaft (10) in opposite sense to the lift cage (20), wherein the primary part (40) of the drive motor (30) is arranged at the counterweight in addition to or instead of at the lift cage (20) and/or guide means (21, 22) for guidance of the lift cage (20) in the lift shaft (10) are provided.

18. Lift according to one of claims 1 to 17, **characterised in that** to obtain an approximately constant propulsive force (Fᵥ) the primary part (40) comprises at least two single-phase excitation modules (41, 41b, 41c, 41d) which are arranged adjacent to one another or one after the other in the direction (x) of movement of the lift cage (20) and produce a magnetic flux (M) running transversely to the direction (x) of movement of the lift cage (20) and the supply voltages of which are displaced by a predetermined phase angle.

19. Lift according to claim 18, **characterised in that** three excitation modules (41a, 41b, 41c) are arranged one after the other in the direction (x) of movement of the lift cage (20), the supply voltages of the modules being displaced by a phase angle of in each instance 120°, or that four excitation modules (41a, 41b, 41c, 41d) are arranged one after the other in the direction (x) of movement of the lift cage (20), the supply voltages of the modules being displaced by a phase angle of in each instance 90°.

20. Lift according to one of claims 18 and 19, **characterised in that** the excitation modules (41, 41b, 41c, 41d) are arranged in at least two groups (G₁, G₂), wherein the supply voltages of the excitation modules (41a, 41b, 41c, 41d) within a group (G₁, G₂) are displaced each time by a phase angle of at least 90° and wherein the supply voltages of the excitation modules (41a, 41b) of the first group (G₁) are displaced relative to the supply voltages of the excitation modules (41c, 41d) of the second group (G₂) by a phase angle of 45°.

21. Lift according to one of claims 18 to 20, **characterised in that** excitation modules (41a, 41a; 41b, 41b; 41d, 41d) of like phase are arranged in a centre section of the drive motor (30) one after the other in the direction (x) of movement of the lift cage (20) and/or that excitation modules (41a, 41b) of unequal phase are arranged adjacent to one another in a transverse direction (y), which is perpendicular to the movement direction (x), of the lift cage (20).

22. Lift according to one of claims 18 to 21, **characterised in that** excitation modules (41a, 41a; 41b, 41b; 41d, 41d) of like phase are combined into a unit which corresponds with twice or a multiple of the length of other excitation modules (41b, 41a; 41c) of the drive motor (30) and/or that a regulation of the current strength (Iₐ, I_{b}) supplied to the excitation modules (41a, 41b) is carried out, wherein the current strength (Iₐ, I_{b}) of the excitation modules (41a, 41b) is regulated in such a manner that the course of the propulsive force (Fᵥₐ, F_{vb}) produced by the excitation modules (41a, 41b) has each time the square shape of a sinusoidal oscillation.

## Revendications

1. Ascenseur, en particulier pour transporter des personnes, avec une cage d'ascenseur (10), une cabine d'ascenseur (20) qui est guidée dans la cage (10) et un moteur d'entraînement (30) qui entraîne directement la cabine (20), le moteur (30) comportant un élément primaire actif (40) qui est disposé sur la cabine (20) et un élément secondaire passif (50) qui est disposé, fixe, dans la cage (10) et qui est espacé de l'élément primaire (40) grâce à un espace, **caractérisé en ce que** le moteur d'entraînement (30) est conçu comme une machine à flux transversal, l'élément primaire (40) comportant un module d'excitation (41) pour produire un flux magnétique qui est transversal par rapport au sens de déplacement de la cabine d'ascenseur (20), avec des aimants permanents (42) dans l'élément primaire (40), lequel élément primaire (40) se déplace linéairement par rapport à l'élément secondaire (50) sous l'influence d'une force de propulsion électromagnétique (F_{V}), l'élément secondaire (50) comportant au moins un rail (51) qui est fabriqué à partir d'une matière magnétique douce et qui est divisé en un grand nombre de segments (52) d'une longueur (1) prédéfinie.

2. Ascenseur selon la revendication 1, **caractérisé en ce que** les segments (52) sont fixés à une paroi (12) de la cage d'ascenseur (10) à l'aide d'éléments intermédiaires (71).

3. Ascenseur selon la revendication 2, **caractérisé en ce que** les éléments intermédiaires (71) sont disposés sur des éléments de support (70) fixés à la paroi (12) de la cage d'ascenseur (10),
et/ou **en ce que** les éléments intermédiaires (71) sont pourvus d'une surface de guidage (72) pour guider l'élément primaire (40) dans un sens transversal (y) de la cabine d'ascenseur (20) qui est perpendiculaire au sens de déplacement (x),
et/ou **en ce que** les éléments intermédiaires (71) sont pourvus d'une surface de guidage (73) pour guider l'élément primaire (40) dans un sens normal (z) de la cabine (20) qui est perpendiculaire au sens de déplacement (x) et au sens transversal (y),
et/ou **en ce que** les segments (52) sont pourvus d'un élément de fixation (54a, 54b) qui est relié par force et/ou par complémentarité de forme aux éléments intermédiaires (71) et/ou venu de matière avec ceux-ci,
et/ou **en ce que** les extrémités des éléments intermédiaires (71) sont biseautées.

4. Ascenseur selon la revendication 3, **caractérisé en ce que** les éléments intermédiaires (71) et les éléments de support (70) sont fabriqués à partir de la même matière,
et/ou **en ce que** les éléments intermédiaires (71) et les éléments de support (70) sont fabriqués à partir d'une matière non magnétique, de préférence de l'aluminium.

5. Ascenseur selon l'une des revendications 2 à 4, **caractérisé en ce que** les segments (52) sont reliés entre eux et les éléments intermédiaires (71) sont espacés les uns des autres dans le sens de déplacement (x) de la cabine (20),
ou **en ce que** les segments (52) sont espacés les uns des autres dans le sens de déplacement (x) de la cabine (20) et les éléments intermédiaires (71) sont reliés entre eux.

6. Ascenseur selon la revendication 3, **caractérisé en ce que** les éléments de support (70) sont espacés les uns des autres dans le sens de déplacement (x) de la cabine (20),
ou **en ce que** les segments (52) et les éléments intermédiaires (71) sont espacés les uns des autres dans le sens de déplacement (x) de la cabine (20) et les éléments de support (70) sont reliés entre eux.

7. Ascenseur selon la revendication 3, **caractérisé en ce que** l'élément de fixation (54a) est pourvu de saillies (55) et est placé par complémentarité de forme dans une rainure (56) de forme correspondante de l'élément intermédiaire (71).

8. Ascenseur selon l'une des revendications 1 à 7, **caractérisé en ce que** les segments (52) ont la même longueur (1),
et/ou **en ce que** le rail (51) est pourvu, sur au moins un côté, de dents (53) équidistantes, étant précisé qu'un pas de denture, formé par les dents (53), du rail (51) correspond à un multiple entier d'un pas polaire de l'élément primaire (40),
et/ou **en ce que** plusieurs rails (51) sont disposés en étant décalés grâce au pas de denture formé par les dents (53).

9. Ascenseur selon la revendication 1, **caractérisé en ce que** pour produire un flux magnétique transversal par rapport au sens de déplacement (x) de la cabine d'ascenseur (20), l'élément primaire (40) comporte un module d'excitation (41) qui est pourvu d'au moins un accumulateur (44a, 44b ; 44c, 44d ; 44e) composé d'aimants (42) disposés en alternance et d'éléments intermédiaires magnétiques doux (43), et d'au moins un enroulement d'excitation (48) qui s'étend dans le sens de déplacement (x) de la cabine (20), étant précis que les aimants (42), pour former un pas polaire prédéfini, sont disposés avec des polarités alternées dans l'accumulateur (44a, 44b ; 44c, 44d ; 44e).

10. Ascenseur selon la revendication 9, **caractérisé par** deux accumulateurs globalement en U (44a, 44b) qui sont tournés l'un vers l'autre, avec leur côté ouvert, et qui sont espacés grâce à un intervalle (45a), les accumulateurs (44a, 44b) présentant des branches (46) qui sont pourvues de l'enroulement d'excitation (48), et l'élément secondaire (50) étant disposé dans l'intervalle (45a),
ou par deux accumulateurs globalement en I (44c, 44d) qui s'étendent, parallèlement, dans le sens de déplacement (x) de la cabine d'ascenseur (20) et qui sont pourvus chacun de l'enroulement d'excitation (48),
ou par une culasse (47) qui entoure au moins partiellement l'accumulateur (44e), pour un retour magnétique de l'élément secondaire (50) vers l'élément primaire (40), la culasse (47) comportant une plaque de base (47a) pourvue de l'enroulement d'excitation (48), et au moins deux branches (47b), les branches (47b) s'étendant le long de deux côtés opposés de l'accumulateur (44e) en étant espacées de celui-ci grâce à un intervalle (45b), et l'élément secondaire (50) étant disposé dans l'intervalle (45b).

11. Ascenseur selon l'une des revendications 9 à 10, **caractérisé par** au moins deux modules d'excitation monophasés (41a, 41b) dont les tensions d'alimentation sont déphasées suivant un angle de phase prédéfini et qui sont disposés les uns derrière les autres ou côte à côte dans le sens de déplacement (x) de la cabine d'ascenseur (20), avec un écartement prédéfini (d).

12. Ascenseur selon la revendication 11, **caractérisé en ce que** le rail (51) est divisé en un grand nombre de segments (52) d'une longueur prédéfinie (1) qui sont espacés les uns des autres dans le sens de déplacement (x) de la cabine d'ascenseur (20), l'écartement (d) entre les modules d'excitation (41a, 41b) étant égal à au moins la longueur (1) du segment (52) le plus long.

13. Ascenseur selon l'une des revendications 10 à 12, **caractérisé en ce que** les éléments intermédiaires (43) de l'élément primaire (40) et/ou la culasse (47) et/ou le rail (51) sont conçus comme un paquet de lamelles, le paquet de lamelles se composant de lamelles en fer doux qui sont isolées électriquement les unes par rapport aux autres.

14. Ascenseur selon la revendication 13, **caractérisé en ce que** le paquet de lamelles est réalisé par cuisson.

15. Ascenseur selon l'une des revendications 9 à 14, **caractérisé en ce que** le module d'excitation (41) est pourvu de galets de guidage (64) ou d'un patin (60), le patin (60) présentant au moins une surface de glissement (61) pour un guidage dans un sens transversal (y) de la cabine (20) qui est perpendiculaire au sens de déplacement (x), et/ou au moins une surface de glissement (62) pour un guidage dans un sens normal (z) de la cabine (20) qui est perpendiculaire au sens de déplacement (x) et au sens transversal (y).

16. Ascenseur selon la revendication 15, **caractérisé en ce que** les surfaces de glissement (61, 62) sont élastiques,
et/ou **en ce que** la surface de glissement (61) pour un guidage dans le sens transversal (y) est pourvue de biseaux (63) pour l'introduction du rail (50) dans le module d'excitation (41).

17. Ascenseur selon l'une des revendications 1 à 16, **caractérisé en ce que** la cabine (20) est reliée à un contrepoids qui est déplacé dans la cage d'ascenseur (10) en sens inverse par rapport à ladite cabine (20), l'élément primaire (40) du moteur d'entraînement (30) étant disposé sur le contrepoids, en plus ou à la place de la cabine (20),
et/ou **en ce qu'**il est prévu des moyens de guidage (21), 22) pour guider la cabine (20) dans la cage d'ascenseur (10).

18. Ascenseur selon l'une des revendications 1 à 17, **caractérisé en ce que** pour qu'on obtienne une force de propulsion (F_{V}) à peu près constante, l'élément primaire (40) comporte au moins deux modules d'excitation (41a, 41b, 41c, 41d) qui sont monophasés, qui sont disposés côte à côte ou les uns derrière les autres dans le sens de déplacement (x) de la cabine (20), qui produisent un flux magnétique (M) transversal par rapport au sens de déplacement (x) de la cabine (20) et dont les tensions d'alimentation sont déphasées suivant un angle de phase prédéfini.

19. Ascenseur selon la revendication 18, **caractérisé en ce qu'**il est prévu, les uns derrière les autres dans le sens de déplacement (x) de la cabine (20), trois modules d'excitation (41a, 41b, 41c) dont les tensions d'alimentation sont déphasées à chaque fois de 120°,
ou **en ce qu'**il est prévu, les uns derrière les autres dans le sens de déplacement (x) de la cabine (20), quatre modules d'excitation (41a, 41b, 41c, 41d) dont les tensions d'alimentation sont déphasées à chaque fois de 90°.

20. Ascenseur selon l'une des revendications 18 à 19, **caractérisé en ce que** les modules d'excitation (41a, 41b ; 41c, 41d) sont disposés en au moins deux groupes (G1, G2), les tensions d'alimentation des modules (41a, 41b ; 41c, 41d) à l'intérieur d'un groupe (G1, G2) étant déphasées suivant un angle de phase d'au moins 90° et les tensions d'alimentation des modules (41a, 41b) du premier groupe (G1) étant déphasées suivant un angle de phase de 45° par rapport aux tensions d'alimentation des modules (41c, 41d) du second groupe (G2).

21. Ascenseur selon l'une des revendications 18 à 20, **caractérisé en ce qu'**il est prévu dans une partie centrale du moteur d'entraînement (30) des modules d'excitation (41a, 41a ; 41b, 41b ; 41d, 41d) de mêmes phases qui sont disposés les uns derrière les autres dans le sens de déplacement (x) de la cabine (20),
et/ou **en ce que** des modules d'excitation (41a, 41b) de phases différentes sont disposés côte à côte dans un sens transversal (y) de la cabine (20) qui est perpendiculaire au sens de déplacement (x).

22. Ascenseur selon l'une des revendications 18 à 21, **caractérisé en ce que** des modules d'excitation (41a, 41a ; 41b, 41b ; 41d, 41d) de mêmes phases sont réunis pour former une unité qui correspond à deux fois, ou plus, la longueur d'autres modules d'excitation (41b, 41a ; 41c) du moteur d'entraînement (30),
et/ou **en ce qu'**il y a une régulation de l'intensité de courant (Ia, Ib) fournie aux modules d'excitation (41a, 41b), l'intensité de courant (Ia, Ib) des modules (41a, 41b) étant régulée de telle sorte que la courbe de la force de propulsion (Fva, Fvb) produite par les modules (41a, 41b) présente la forme carrée d'une oscillation sinusoïdale.
